(19) Europäisches Patentamt / European Patent Office / Office européen des brevets

(11) **EP 4 372 954 A1**

(12) **EUROPEAN PATENT APPLICATION**
published in accordance with Art. 153(4) EPC

(43) Date of publication:
**22.05.2024 Bulletin 2024/21**

(21) Application number: **22841321.7**

(22) Date of filing: **11.07.2022**

(51) International Patent Classification (IPC):
**H02J 7/00** *(2006.01)*    **H01M 10/44** *(2006.01)*

(52) Cooperative Patent Classification (CPC):
**Y02E 60/10**

(86) International application number:
**PCT/CN2022/104948**

(87) International publication number:
**WO 2023/284685 (19.01.2023 Gazette 2023/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.07.2021 CN 202110794675**

(71) Applicant: **Vivo Mobile Communication Co., Ltd.**
**Dongguan, Guangdong 523863 (CN)**

(72) Inventor: **YAO, Jie**
**Dongguan, Guangdong 523863 (CN)**

(74) Representative: **Lavoix**
**Bayerstraße 83**
**80335 München (DE)**

(54) **BATTERY CHARGING CONTROL CIRCUIT AND ELECTRONIC DEVICE**

(57)    A battery charging control circuit is provided, belonging to the field of integrated circuits. The battery charging control circuit includes: a first battery (10) and a second battery (20) connected in series, a capacitor module (30), a charging module (40), and a control module (50). The control module (50) is connected to: in a case that an electricity amount of only one of the first battery (10) and the second battery (20) reaches a first preset threshold, control to disconnect a path for the charging module (40) to charge the first battery (10) and the second battery (20) and to connect a path for the charging module (40) to charge the capacitor module (30); and in a case that a capacitor voltage of the capacitor module (30) reaches a second preset threshold, control to disconnect the path for the charging module (40) to charge the capacitor module (30) and to connect a path for the capacitor module (30) to charge a battery of the first battery (10) and the second battery (20) that has not reached the first preset threshold.

FIG. 1

EP 4 372 954 A1

# Description

## CROSS-REFERENCE TO RELATED APPLICATIONS

The present invention claims priority to Chinese Patent Application No. 202110794675.8, filed with the China National Intellectual Property Administration on July 14, 2021, and entitled "BATTERY CHARGING CONTROL CIRCUIT AND ELECTRONIC DEVICE", which is incorporated herein by reference in its entirety.

## TECHNICAL FIELD

This application belongs to the field of integrated circuits, and specifically relates to a battery charging control circuit and an electronic device.

## BACKGROUND

With the development of smart terminals, foldable screens have begun to enter people's life. In order to ensure that usage of the spaces of the main screen and the secondary screen of a foldable screen on the market is maximized, two independent batteries are usually connected in series to supply power to the main screen and the secondary screen of the foldable screen. A power supply system formed in series can use higher power to supply power to the foldable screen.

However, during usage, if there is a capacity difference between the two independent batteries, during the charging process, the battery with a smaller capacity is first fully charged, but the battery with a larger capacity is not fully charged at this time. If charging continues, the battery that is fully charged has a safety risk. If charging of the two batteries connected in series is stopped, the battery with the larger capacity is not actually fully charged, which will significantly reduce the efficiency of the battery.

## SUMMARY

The purpose of the embodiments of this application is to provide a battery charging control circuit and an electronic device, which can solve the problems of safety risks and low usage efficiency of batteries caused by difference between battery capacities.

To resolve the technical problem, this application is implemented as follows:

In a first aspect, embodiments of this application provide a battery charging control circuit, including:

a first battery and a second battery connected in series;
a capacitor module connected to the first battery and the second battery connected in series;
a charging module, respectively connected to the capacitor module and the first battery and the second battery connected in series; and

a control module, respectively connected to the capacitor module and the first battery and the second battery connected in series, and configured to: in a case that an electricity amount of only one of the first battery and the second battery reaches a first preset threshold, control to disconnect a path for the charging module to charge the first battery and the second battery and to connect a path for the charging module to charge the capacitor module; and in a case that a capacitor voltage of the capacitor module reaches a second preset threshold, control to disconnect the path for the charging module to charge the capacitor module and to connect a path for the capacitor module to charge a battery of the first battery and the second battery whose electricity amount has not reached the first preset threshold.

In a second aspect, embodiments of this application provide an electronic device, including the battery charging control circuit described in the first aspect.

In the embodiments of this application, when it is detected that there is no difference in charging electricity amounts of the first battery and the second battery connected in series, the charging path corresponding to the charging module can be connected to charge the first battery and the second battery at the same time. When it is detected that there is a difference in the charging electricity amounts of the first battery and the second battery, the charging path corresponding to the charging module can be controlled to disconnect to switch to charge the capacitor module. By connecting the charging path corresponding to the capacitor module, the path for the capacitor module to charge the battery that is not charged to the preset threshold is connected, to ensure that the two independent batteries can eventually reach the preset electricity amount state. Therefore, it can be avoided that when one battery is fully charged but the other battery is not fully charged, and the battery that is fully charged continues to be charged, the battery that is fully charged will be exposed to safety risks. At the same time, while ensuring battery safety, the two independent batteries can eventually reach the preset electricity amount state, thereby significantly improving the efficiency of the first battery and the second battery.

## BRIEF DESCRIPTION OF DRAWINGS

FIG. 1 is a block diagram of a circuit connection of a battery charging control circuit according to an embodiment of this application;
FIG. 2 is a circuit diagram of a battery charging control circuit according to a first embodiment of this application;
FIG. 3 is a schematic diagram of a charging flow corresponding to a battery charging control circuit according to a first embodiment of this application;

FIG. 4 is a circuit diagram of a battery charging control circuit according to a second embodiment of this application;

FIG. 5 is a schematic diagram of a charging flow corresponding to a battery charging control circuit according to a second embodiment of this application; and

FIG. 6 is a block diagram of a circuit connection of an electronic device according to an embodiment of this application.

**DESCRIPTION OF EMBODIMENTS**

The following clearly and completely describes technical solutions in embodiments of this application with reference to accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

The terms "first", "second", and the like in this specification and claims of this application are used to distinguish between similar objects instead of describing a specific order or sequence. It should be understood that data used in such a way is interchangeable in proper circumstances, so that the embodiments of this application can be implemented in an order other than the order illustrated or described herein. Objects classified by "first", "second", and the like are usually of a same type, and the number of objects is not limited. For example, there may be one or more first objects. In addition, in the specification and claims, "and/or" means at least one of connected objects, and the character "/" generally means that associated objects are in an "or" relationship.

The battery charging control circuit and the electronic device provided by the embodiments of this application will be described in detail below with reference to the accompanying drawings through specific embodiments and application scenarios.

The embodiment of this application provides a battery charging control circuit, including: a first battery and a second battery connected in series; a capacitor module connected to the first battery and the second battery connected in series; a charging module connected to the capacitor module and the first battery and the second battery connected in series; and a control module, respectively connected to the capacitor module and the first battery and the second battery connected in series, and configured to: in a case that an electricity amount of only one of the first battery and the second battery reaches a first preset threshold, control to disconnect a path for the charging module to charge the first battery and the second battery and to connect a path for the charging module to charge the capacitor module; and in a case that a capacitor voltage of the capacitor module reaches a second preset threshold, control to disconnect the path for the charging module to charge the capacitor module and to connect a path for the capacitor module to charge a battery of the first battery and the second battery whose electricity amount has not reached the first preset threshold.

In the embodiment of this application, the first battery and the second battery connected in series can be two independent batteries, and the batteries are connected in series through a flexible printed circuit (FPC) to supply power to the smart terminal, or the first battery and the second battery can be a dual-cell structure and are connected in series and externally connected to a protection board to supply power to the smart terminal.

There is a capacity difference between the first battery and the second battery, which may be caused because the initial capacities of the first battery and the second battery are different. Alternatively, the initial capacities of the first battery and the second battery are the same, but because aging degrees of the two batteries are different during usage, there is a capacity difference between the first battery and the second battery.

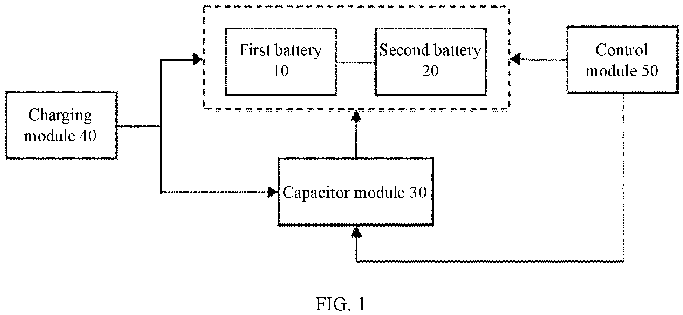

FIG. 1 is a block diagram of a circuit connection of a battery charging control circuit according to an embodiment of this application.

As shown in FIG. 1, a charging module 40 is connected to a peripheral charging device (not shown in the figure). When there is no capacity difference between a first battery 10 and a second battery 20, or when there is a capacity difference between the first battery 10 and the second battery 20, but the first battery 10 and the second battery 20 are not fully charged, the charging module 40 can supply power to the first battery 10 and the second battery 20 at the same time through a charging path formed by plugging in the charging device.

A capacitor module 30 may include one or more capacitors connected to the charging module 40. When there is a capacity difference between the first battery 10 and the second battery 20, and consequently only one battery is fully charged to the preset threshold, that is, when one battery is fully charged and the other battery is not fully charged, the control module 50 controls the charging module 40 to disconnect the charging path that supplies power to the first battery and the second battery, and the charging module 40 and the capacitor module 30 are connected to form a new charging path, thereby switching to charge the capacitor of the capacitor module 30.

When the capacitor module 30 is charged to the preset threshold, the control module 50 controls the charging module 40 to disconnect from the capacitor module 30, and controls the capacitor module 30 to be connected in parallel with a battery that is not fully charged, so that the capacitor module 30 discharges power to the battery connected in parallel, so that the power of the battery is replenished, thereby ensuring that both the first battery 10 and the second battery 20 eventually are fully charged.

In one embodiment, the battery charging control circuit also includes a differential voltage detection circuit (not shown in the figure), which is connected between the control module 50 and the capacitor module 30 for measuring the capacitor voltage of the capacitor module 30 and sending the capacitor voltage to the control module 50.

In one embodiment, the battery charging control circuit also includes an electricity amount metering module (not shown in the figure), which is connected between the control module 50 and the first battery 10 and the second battery 20 connected in series, and is configured to measure electricity amounts of the first battery 10 and the second battery 20 respectively and send the electricity amounts to the control module 50.

The battery charging control circuit in the embodiment of this application also includes a switch group (not shown in the figure). A switch in the switch group includes a first access end, a second access end and a control end. The first access end and the second access end of the switch in the switch group are respectively connected to the first battery 10 and the second battery 20 connected in series, the capacitor module 30 and the charging module 40. The control module 50 is connected to the control end of the switch in the switch group and controls the corresponding charging path through the control end of the switch in the switch group.

The switch group includes multiple switches. The access ends of the multiple switches are connected to the first battery 10, the second battery 20, the capacitor module 30 and the charging module 40. The control module 50 sends control signals to the control ends of the switches, thereby controlling the on or off of the corresponding switch in the switch group to form a charging path for the charging module 40 to charge the first battery 10 and the second battery 20 connected in series, or to form a charging path for the charging module 40 to charge the capacitor module 30, or to form a charging path through which the capacitor module 30 is connected in parallel with one of the first battery 10 and the second battery 20 that is not fully charged, to charge the battery connected in parallel.

Below, the battery charging control circuit of this application will be described in combination with different embodiments.

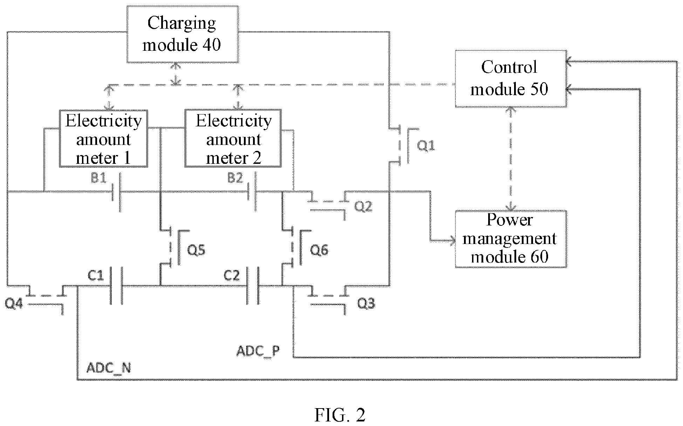

First, refer to FIG. 2. FIG. 2 is a circuit diagram of a battery charging control circuit according to a first embodiment of this application.

In this embodiment, the batteries connected in series include a first battery B1 and a second battery B2, the capacitor module includes a first capacitor C1 and a second capacitor C2, and the differential voltage detection module includes a first differential voltage detection path ADC_P and a second differential voltage detection path ADC_N. The electricity amount metering module includes an electricity amount meter 1 and an electricity amount meter 2, and the switch group includes a second switch Q2, a third switch Q3, a fourth switch Q4, a fifth switch Q5, and a sixth switch Q6.

In the battery charging control circuit of this embodiment, a first end of the first capacitor C1 is connected to a first access end of the fifth switch Q5, a second end of the first capacitor C1 is connected to a first access end of the fourth switch Q4, and a first end of the second capacitor C2 is connected to a second access end of the third switch Q3 and the first access end of the sixth switch Q6. A first access end of the second switch Q2 is connected to a first end of the charging module 40 and a first access end of the third switch Q3, and a second access end of the second switch Q2 is connected to a first end of the second battery B2 that is not connected to the first battery B1 and a second access end of the sixth switch Q6.

The first access end of the third switch Q3 is connected to the first end of the charging module 40, and the second access end of the third switch Q3 is connected to the first access end of the sixth switch Q6. A second access end of the fourth switch Q4 is connected to a second end of the first battery B 1 that is not connected to the second battery B2 and the second end of the charging module 40; a second access end of the fifth switch Q5 is connected to a third end of the first battery B 1 that is connected to the second battery B2, and a second access end of the sixth switch Q6 is connected to a first end of the second battery B2 that is not connected to the first battery B1 and a second access end of the second switch Q2.

As shown in FIG. 2, the electricity amount meter 1 is connected to the first battery B1 for measuring the electricity amount of the first battery B1 and transmitting the corresponding electricity amount data to the control unit 50. The electricity amount meter 2 is connected to the second battery B2, and is configured to measure the electricity amount of the second battery B2 and transmit the corresponding electricity amount data to the control unit 50. The control unit 50 compares the electricity amount data of the corresponding battery with a preset threshold, to know which battery of the second battery B2 and first battery B1 is first fully charged.

For example, for an intelligent terminal device, if corresponding full-power voltage values of the first battery B1 and the second battery B2 are both 4.4 V under normal circumstances, when electricity amount data of corresponding batteries output by the electricity amount meter reaches 4.4 V, the control unit 50 can know that the corresponding batteries are both fully charged.

If the battery ages and the battery capacity is lost, and the full-power voltage value corresponding to the first battery B 1 is 4.3 V and the full-charge voltage value corresponding to the second battery B2 is 4.5 V, when electricity amount data of the corresponding batteries output by the electricity amount meter 1 reaches 4.3 V, the control unit 50 can know that the first battery B1 is fully charged, but the second battery B2 is not yet fully charged.

If there is an initial capacity difference between the first battery B1 and the second battery B2, and the full-power voltage value corresponding to the first battery B1 is 4.3 V and the full-power voltage value corresponding to the second battery B2 is 4.5 V, when electricity amount data of the corresponding batteries output by the electricity amount meter 1 reaches 4.3 V, the control unit 50 can know that the first battery B1 is fully charged, but the second battery B2 is not yet fully charged.

The first differential voltage detection channel ADC_P is connected to the first end of the second capacitor C2, and the second differential voltage detection channel ADC_N is connected to the second end of the first capacitor C1. The first end of the first capacitor C1 and the second end of the second capacitor C2 are connected in series. Therefore, capacitance values detected by the first differential voltage detection channel and the second differential voltage detection channel ADC_N are output to the control module 50, to know current voltage values at two ends of the first capacitor C1 and the second capacitor C2 connected in series. The control unit 50 compares the corresponding current voltage value with a preset threshold to know whether the first capacitor C1 and the second capacitor C2 connected in series are fully charged.

In one embodiment, the first capacitor C1 and the second capacitor C2 may be large capacitors. For example, the capacitance of the capacitors C1 and C2 may be in the range of 20 to 100 $\mu$F. The capacitances of the first capacitor C1 and the second capacitor C2 may be the same. When the voltage of the charging device connected to the smart terminal is 9 V, the first capacitor C1 and the second capacitor C2 share the 9 V voltage, that is, the first capacitor C1 and the second capacitor C2 are 4.5 V respectively. Then, when the control unit 50 calculates based on the capacitance values output by the first differential voltage detection channel ADC_P and the second differential voltage detection channel ADC_N that the voltage at two ends of the first capacitor C1 and the second capacitor C2 is 9 V, it can be known that the first capacitor C1 and the second capacitor C2 are charged to 4.5 V respectively and are fully charged.

In one embodiment, the battery charging control circuit may also include a first switch Q1. As shown in FIG. 2, the first switch Q1 is provided between the first end of the charging module 40 and the first access end of the switch Q2 (that is, the first access end of the switch Q3). One end of the first switch Q1 is connected to the charging module 40, and the other end of the first switch is connected to the power management module 60, and the first switch is configured to control an on or off state of the path through which the charging module 40 charges the power management module 60.

The power management module 60 is connected to the peripheral devices of the smart terminal, such as the motherboard, the central processing unit, and the camera, and is configured to convert the received power voltage into voltages corresponding to different peripheral devices and then supply power to the peripheral devices.

As mentioned above, the control module 50 can control the corresponding charging path through the control end of each switch in the switch group.

In an embodiment including the switch Q1, after the control module 50 controls the switch Q1 to turn on and the switch Q2 to turn off, the charging module 40 and the power management module 60 form a charging path, and power can be directly supplied to the power management module 60 through an external charging device. Of course, the embodiment of this application may not include the switch Q1.

As shown in FIG. 2, the first access end of the switch Q2 is also connected to the power management module 60. After the control module 50 controls the switch Q2 to turn on, the first battery B1 and the second battery B2 connected in series can also supply power to the power management module 60.

For the embodiment of FIG. 2, without considering the switch Q1, specifically, the control module 50 controls the second switch Q2 in the switch group to turn on to form a first charging path, and the charging module 40 charges the first battery B1 and the second battery B2 through the first charging path.

During the process of charging the first battery B1 and the second battery B2 by the charging module 40, if the control module 50 detects that an electricity amount of only one of the first battery B1 and the second battery B2 measured by the electricity amount meter 1 and the electricity amount meter 2 reaches the first preset threshold, the second switch Q2 in the first charging path is controlled to turn off and the third switch Q3 and the fourth switch Q4 in the switch group are controlled to turn on to form a second charging path, and the charging module 40 charges the first capacitor C1 and the second capacitor C2 through the second charging path.

Here, the first preset threshold corresponds to a voltage value at which the battery with a smaller capacity is fully charged, such as the above-mentioned 4.3 V

When a battery of the first battery B 1 and the second battery B2 whose electricity amount reaches the first preset threshold is the second battery B2, that is, the capacity of the second battery B2 is smaller than the capacity of the first battery B1, the second battery B2 is fully charged, but the first battery B1 is not fully charged yet. In this case, the control module 50 needs to control the charging module 40 to charge the first capacitor C1 and the second capacitor C2, so as to use the corresponding first capacitor C1 or the second capacitor C2 to continue charging the first battery B1 that is not yet fully charged.

Specifically, when the control module 50 detects that the capacitance voltages of the first capacitor C1 and the second capacitor C2 measured by the differential voltage detection module reach the second preset threshold, the control module 50 controls the third switch Q3 in the second charging path to turn off and controls the fifth switch Q5 in the switch group to turn on, to connect the first capacitor C1 and the first battery B 1 in parallel and charge the first battery B 1.

The first battery B1 is charged separately through the first capacitor C1. After the power of the first capacitor C1 drops and is insufficient to charge the first battery B1, the fifth switch Q5 is turned off again and the third switch Q3 is turned on to form the second charging path. The charging module 40 charges the first capacitor C1 and the second capacitor C2 through the second charging path until the capacitance voltages of the first capacitor C1 and the second capacitor C2 reach the second preset threshold, and then the first capacitor C1 and the first battery B1 are connected in parallel to charge the first battery B 1. This cycle continues until the first battery B 1 is fully charged.

When a battery of the first battery B 1 and the second battery B2 whose electricity amount reaches the first preset threshold is the first battery B 1, that is, the capacity of the first battery B 1 is smaller than the capacity of the second battery B2, the first battery B 1 is fully charged, but the second battery B2 is not fully charged yet. In this case, the control module 50 needs to control the charging module 40 to charge the first capacitor C1 and the second capacitor C2, so as to use the corresponding first capacitor C1 or the second capacitor C2 to continue charging the second battery B2 that is not yet fully charged.

Specifically, when the control module 50 detects that the capacitance voltages of the first capacitor C1 and the second capacitor C2 measured by the differential voltage detection module reach the second preset threshold, the control module 50 controls the third switch Q3 and the fourth switch Q4 in the second charging path to turn off and controls the fifth switch Q5 and the sixth switch Q6 in the switch group to turn on, to connect the second capacitor C2 and the second battery B2 in parallel and charge the second battery B2.

The second battery B2 is separately charged through the second capacitor C2. After the power of the second capacitor C2 drops and is insufficient to charge the second battery B2, the fifth switch Q5 and the sixth switch Q6 are turned off again, and the third switch Q3 is turned on to form the second charging path. The charging module 40 charges the first capacitor C1 and the second capacitor C2 through the second charging path until the capacitance voltages of the first capacitor C1 and the second capacitor C2 reach the second preset threshold, and then the second capacitor C2 and the second battery B2 are connected in parallel to charge the second battery B2. This cycle continues until the second battery B2 is fully charged.

In one embodiment, the battery charging control circuit may further include a third battery connected in series with the first battery B1 and the second battery B2, the capacitor module 40 further includes a third capacitor, and the switch group may further include a ninth switch. A second end of the third battery is connected to the first end of the second battery B2 that is not connected to the first battery B1, and the first end of the third battery is connected to the second access end of the second switch Q2. A first end of the third capacitor is connected to the second access end of the second switch Q2, and a second end of the third capacitor is connected to the first end of the second capacitor C2. A first end of the ninth switch is connected to the first end of the third capacitor, and a second end of the ninth switch is connected to the first end of the third battery.

In other words, when the battery charging control circuit of the embodiment of this application includes multiple batteries connected in series and there is a capacity difference between the batteries, an additional switch and capacitor can be disposed correspondingly for the added third battery, so that when it is detected that the third battery is not fully charged, the control module 50 can control the corresponding switch to form a path for charging the first capacitor C1 and the second capacitor C2 by the charging module 40. When it is detected that the first capacitor C1 and the second capacitor C2 are fully charged, the control module 50 can control the third capacitor to connect in parallel with the third battery, so that the third capacitor can charge the third battery separately.

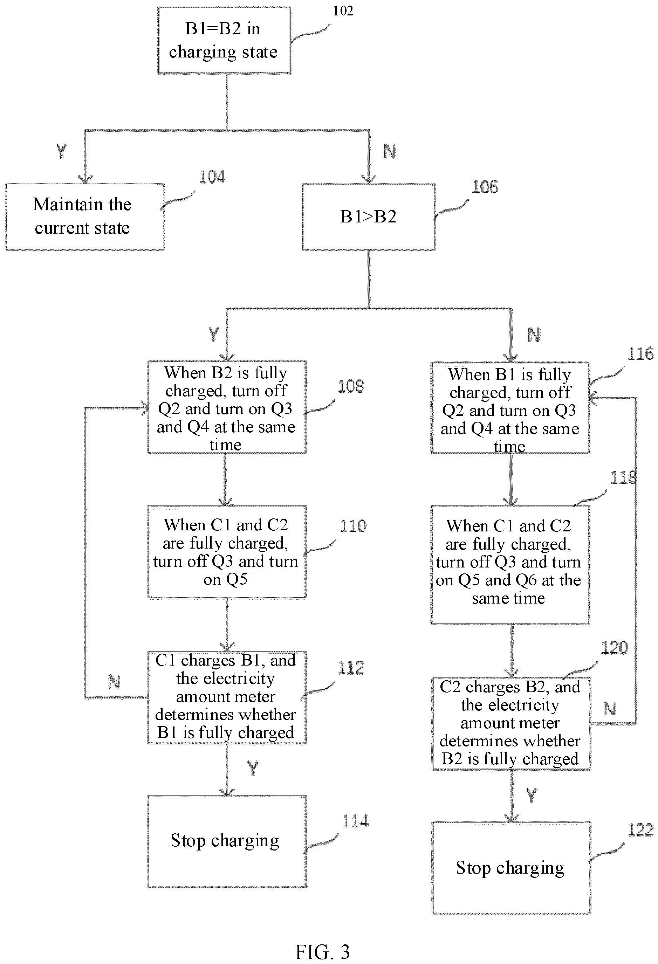

FIG. 3 is a schematic diagram of a charging process corresponding to the battery charging control circuit according to a first embodiment of this application. As shown in FIG. 3, the method includes the following steps:

Step 102: Determine whether the capacity of the first battery B1 is equal to the capacity of the second battery B2 in a charging state. If yes (Y), proceed to step 104; if not (N), proceed to step 106.

Step 104: Maintain the current charging state.

Step 106: Determine whether the capacity of the first battery B1 is greater than the capacity of the second battery B2. If yes, proceed to step 108; if not, proceed to step 116.

Step 108: When the second battery B2 is fully charged, turn off the switch Q2 and turn on the switches Q3 and Q4 at the same time.

Step 110: When the first capacitor C1 and the second capacitor C2 are fully charged, turn off the switch Q3 and turn on the switch Q5.

Step 112: The first capacitor C1 charges the first battery B1, and the electricity amount meter 1 determines whether the first battery B1 is fully charged. If yes, proceed to step 114; if not, return to step 108.

Step 114: Stop charging the first battery B1.

Step 116: When the first battery B1 is fully charged, turn off the switch Q2 and turn on the switches Q3 and Q4 at the same time.

Step 118: When the first capacitor C1 and the second capacitor C2 are fully charged, turn off the switch Q3 and turn on the switches Q5 and Q6.

Step 120: The second capacitor C2 charges the second battery B2, and the electricity amount meter 2 determines whether the second battery B2 is fully charged. If yes, proceed to step 122; if not, return to step 116.

Step 122: Stop charging the second battery B2.

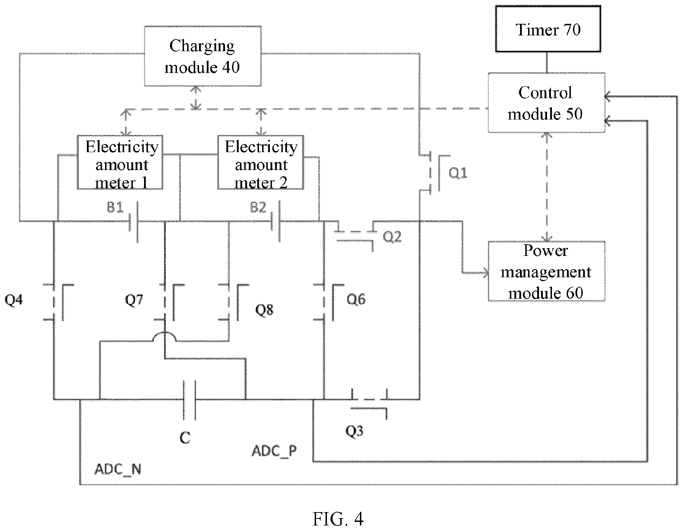

Next, refer to FIG. 4. FIG. 4 is a circuit diagram of a battery charging control circuit according to a second embodiment of this application.

The difference of this embodiment from the embodiment of FIG. 2 is that the capacitor module includes a capacitor C, and the switch group includes a second switch Q2, a third switch Q3, a fourth switch Q4, a sixth switch Q6, a seventh switch Q7 and an eighth switch Q8.

In the battery charging control circuit of this embodiment, a first end of the capacitor C is connected to a second access end of the third switch Q3, a first access end of the sixth switch Q6, and a first access end of the seventh switch Q7, a second end of the capacitor C is connected to a first access end of the fourth switch Q4 and a first access end of the eighth switch Q8, a first access end of the second switch Q2 is connected to a first end of the charging module 40 and a first access end of the third switch Q3, a second access end of the second switch Q2 is connected to a first end of the second battery B2 that is not connected to the first battery B 1 and a second access end of the sixth switch Q6, a first access end of the third switch Q3 is connected to a first end of the charging module 40, a second access end of the third switch Q3 is connected to a first access end of the sixth switch Q6 and a first access end of the seventh switch Q7, a second access end of the fourth switch Q4 is connected to a second end of the first battery B 1 that is not connected to the second battery B2 and a second end of the charging module 40, a second access end of the sixth switch Q6 is connected to a first end of the second battery B2 that is connected to the first battery B1 and a second access end of the second switch Q2, and a second access end of the seventh switch Q7 and a second access end of the eighth switch Q8 are connected to a third end of the first battery B 1 that is connected to the second battery B2.

The first differential voltage detection channel ADC_P is connected to the first end of the capacitor C, and the second differential voltage detection channel ADC_N is connected to the second end of the capacitor C. Therefore, the capacitance values detected by the first differential voltage detection channel ADC_P and the second differential voltage detection channel ADC_N are output to the control module 50, so that the current voltage value at two ends of the capacitor C can be known. The control unit 50 compares the corresponding capacitor voltage value with the preset second threshold, so that it can be known whether the capacitor C currently reaches the voltage threshold that can charge the corresponding first battery B 1 or second battery B2 that is not fully charged.

For example, the voltage required for fully charging the first battery B 1 or the second battery B2 is 4.4 V, and the capacitor C needs to be charged to higher than 4.4 V before it can charge the corresponding battery. If the power supply voltage provided by the external charging device remains at 9 V, the capacitor C can be charged to 9 V normally. Usually, the battery full-charge voltage of a smart terminal is 4.4 V If a 4.4 V battery is charged using a capacitor charged to 9 V, the charging current is difficult to control due to the relatively large voltage difference. Therefore, in this embodiment of this application, the second preset threshold corresponding to the capacitor C can be higher than 4.4 V and not exceed 4.5 V

In order to stop charging module 40 from charging the capacitor C after the charging voltage of capacitor C reaches the second preset threshold, and to switch to that the capacitor C charges the battery that is not fully charged, the battery charging control circuit of the embodiment of this application may further includes a timer 70. The timer 70 is connected to the control module 50 and is configured to time the maximum charging time required for charging the capacitor C to reach the preset threshold, and to send a signal to the control module 50 when the maximum charging time is reached, so that the control module 50 controls the corresponding switch to form a corresponding charging path to charge the battery that is not fully charged.

The maximum charging time can be calculated based on the capacitance of the capacitor C, the output voltage of the external charging device, the on-resistance of the switch Q3 and the current voltage of the capacitor C.

The calculation formula corresponding to the maximum charging time of the capacitor C is:

$$RC*\ln[(2*Vbat-Vc)/Vbat],$$

where R is the on-resistance of Q3, C is the capacitance of the capacitor C, Vbat is the output voltage of the external charging device and is generally slightly higher than the sum of the voltages of the first battery B1 and the second battery B2, and Vc is the current voltage of the capacitor C.

By controlling the maximum charging time of the capacitor C so that the capacitor C reaches the corresponding second preset threshold, the charging current and battery safety can be ensured.

In one embodiment, the capacitor C can be a large capacitor. For example, the capacitance of the capacitor C can be in the range of 20 to 100 μF.

As mentioned above, the control module 50 can control the corresponding charging path through the control end of each switch in the switch group.

In an embodiment of the FIG. 4, when the first switch Q1 is included, after the control module 50 controls the switch Q1 to turn on and controls the switch Q2 to turn off, the charging module 40 and the power management module 60 form a charging path, and power can be directly supplied to the power management module 60 through an external charging device. Of course, the embodiment of this application may not include the first switch Q1.

Specifically, for the embodiment of FIG. 4, when the first switch Q1 is not included, the control module 50 controls the second switch Q2 in the switch group to turn on to form a third charging path, and the charging module 40 charges the first battery B1 and the second battery B2 through the third charging path.

During the process of charging the first battery B1 and the second battery B2 by the charging module 40, if the control module 50 detects that an electricity amount of only one of the first battery B1 and the second battery B2 measured by the electricity amount meter 1 and the electricity amount meter 2 reaches the first preset threshold, the second switch Q2 in the third charging path is controlled to turn off and the third switch Q3 and the fourth switch Q4 in the switch group are controlled to turn on to form a fourth charging path, and the charging module 40 charges the capacitor C through the fourth charging path.

Here, the first preset threshold corresponds to a voltage value at which the battery with a smaller capacity is fully charged.

When a battery of the first battery B1 and the second battery B2 whose electricity amount reaches the first preset threshold is the second battery B2, that is, the capacity of the second battery B2 is smaller than the capacity of the first battery B1, the second battery B2 is fully charged, but the first battery B1 is not fully charged yet. In this case, the control module 50 needs to control the charging module 40 to charge the capacitor C, so as to use the corresponding capacitor C to continue charging the first battery B1 that is not yet fully charged.

Specifically, when the control module 50 detects that the capacitance voltage of the capacitor C measured by the differential voltage detection module reaches the second preset threshold, the control module 50 controls the third switch Q3 in the fourth charging path to turn off and controls the fourth switch Q4 and the seventh switch Q7 in the switch group to turn on, to connect the capacitor C and the first battery B1 in parallel and charge the first battery B1.

The control module 50 turns on the timer while turning on the third switch Q3 and the fourth switch Q4 to form the fourth charging path for charging the capacitor C, and calculates the maximum charging time T required for the capacitor C to be charged to the second preset threshold, and then charges the capacitor C. After the period of time T, the third switch Q3 is turned off again, the seventh switch Q7 is turned on, and the capacitor C is used to charge the first battery B1 separately. After the power of the capacitor C drops and is insufficient to charge the first battery B1, the seventh switch Q7 is turned off and the third switch Q3 again is turned on to form a fourth charging path. The charging module 40 then charges the capacitor C through the fourth charging path until the capacitor voltage of the capacitor C reaches the second preset threshold after the period of time T, and then connects the capacitor C in parallel with the first battery B1 and charges the first battery B1. This cycle continues until the first battery B1 is fully charged.

When a battery of the first battery B1 and the second battery B2 whose electricity amount reaches the first preset threshold is the first battery B1, that is, the capacity of the first battery B1 is smaller than the capacity of the second battery B2, the first battery B1 is fully charged, but the second battery B2 is not fully charged yet. In this case, the control module 50 needs to control the charging module 40 to charge the capacitor C, so as to use the capacitor C to continue charging the second battery B2 that is not yet fully charged.

Specifically, when the control module 50 detects that the capacitance voltage of the capacitor C measured by the differential voltage detection module reaches the second preset threshold, the control module 50 controls the third switch Q3 and the fourth switch Q4 in the fourth charging path to turn off and controls the eighth switch Q8 and the sixth switch Q6 in the switch group to turn on, to connect the second capacitor C and the second battery B2 in parallel and charge the second battery B2.

The second battery B2 is separately charged through the capacitor C. After the power of the capacitor C drops and is insufficient to charge the second battery B2, the eighth switch Q8 and the sixth switch Q6 are turned off and the third switch Q3 and the fourth switch Q4 are turned on again to form the fourth charging path. The charging module 40 then charges the capacitor C through the fourth charging path until the capacitor voltage of the capacitor C reaches the second preset threshold, and then connects the capacitor C in parallel with the second battery B2 and charges the second battery B2. This cycle continues until the second battery B2 is fully charged.

In one embodiment, the battery charging control circuit may further include a third battery connected in series with the first battery B1 and the second battery B2, and the switch group further includes a tenth switch. A second end of the third battery is connected to the first end of the second battery B2 that is not connected to the first battery B1, and the first end of the third battery is connected to the second access end of the second switch Q2. A first end of the tenth switch is connected to the second end of the capacitor C, and a second end of the second switch is connected to the second end of the third battery.

In other words, when the battery charging control circuit of the embodiment of this application includes multiple batteries connected in series and there is a capacity difference between the batteries, an additional switch can be disposed correspondingly for the added third battery, so that when it is detected that the third battery is not fully charged, the control module 50 can control the corresponding switch to form a path for charging the capacitor C by the charging module 40. When it is detected that the capacitor C reaches the second preset threshold, the control module 50 can control the third capacitor to connect in parallel with the third battery, so that the third capacitor can charge the third battery separately.

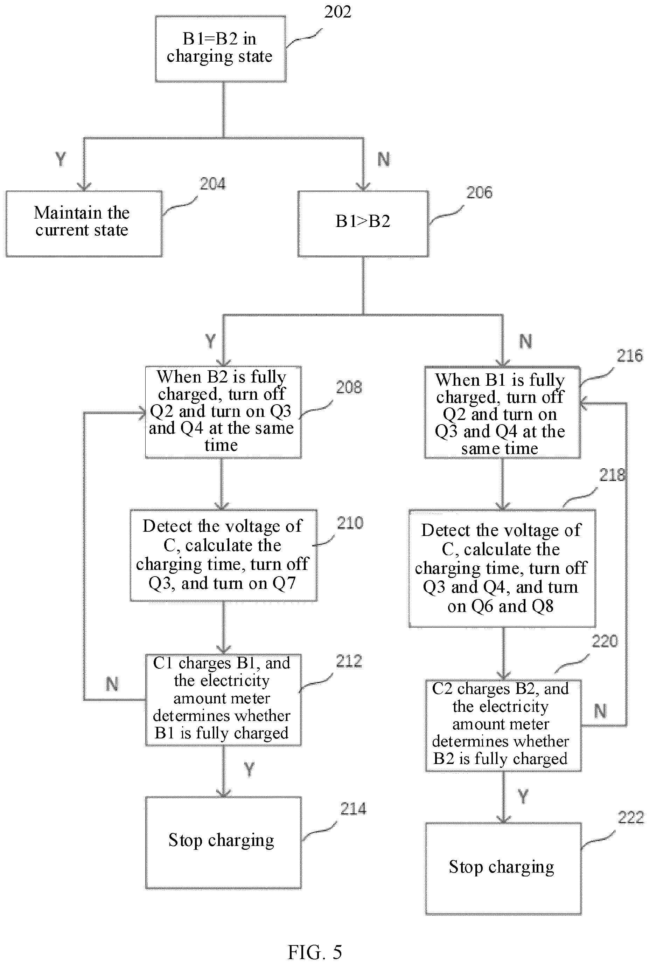

FIG. 5 is a schematic diagram of a charging process corresponding to the battery charging control circuit according to a second embodiment of this application. As shown in FIG. 5, the method includes the following steps:

Step 202: Determine whether the capacity of the first battery B1 is equal to the capacity of the second battery B2 in a charging state. If yes (Y), proceed to step 204; if not (N), proceed to step 206.

Step 204: Maintain the current charging state.

Step 206: Determine whether the capacity of the first battery B1 is greater than the capacity of the second battery B2. If yes, proceed to step 208; if not, proceed to step 216.

Step 208: When the second battery B2 is fully charged, turn off the switch Q2 and turn on the switches Q3 and Q4 at the same time.

Step 210: Detect a current voltage of the capacitor C and calculate the maximum charging time, and after reaching the maximum charging time, turn off the switch Q3 and turn on the switch Q7.

Step 212: The capacitor C charges the first battery B1, and the electricity amount meter 1 determines whether the first battery B1 is fully charged. If yes, proceed to step 214; if not, return to step 208.

Step 214: Stop charging the first battery B1.

Step 216: When the first battery B1 is fully charged, turn off the switch Q2 and turn on the switches Q3 and Q4 at the same time.

Step 218: Detect a current voltage of the capacitor C and calculate the maximum charging time, and after reaching the maximum charging time, turn off the switches Q3 and Q4 and turn on the switches Q6 and Q8.

Step 220: The capacitor C charges the second battery B2, and the electricity amount meter 2 determines whether the second battery B2 is fully charged. If yes, proceed to step 222; if not, return to step 216.

Step 222: Stop charging the second battery B2.

Optionally, the switches in the switch group are MOS transistors.

In the battery charging control circuit provided in the embodiments of this application, when it is detected that there is no difference in charging electricity amounts of the batteries B1 and B2 connected in series, the charging path corresponding to the charging module can be connected to charge the batteries B1 and B2 at the same time. When it is detected that there is a difference in the charging electricity amounts of the batteries B1 and B2, the charging path corresponding to the charging module can be controlled to disconnect to switch to charge the capacitor module. By connecting the charging path corresponding to the capacitor module, the path for the capacitor module to charge the battery that is not charged to the preset threshold is connected, to ensure that the two independent batteries can eventually reach the preset electricity amount state. Therefore, it can be avoided that when one battery is fully charged but the other battery is not fully charged, and the battery that is fully charged continues to be charged, the battery that is fully charged will be exposed to safety risks. At the same time, while ensuring battery safety, the two independent batteries can eventually reach the preset electricity amount state, thereby significantly improving the efficiency of the batteries B1 and B2.

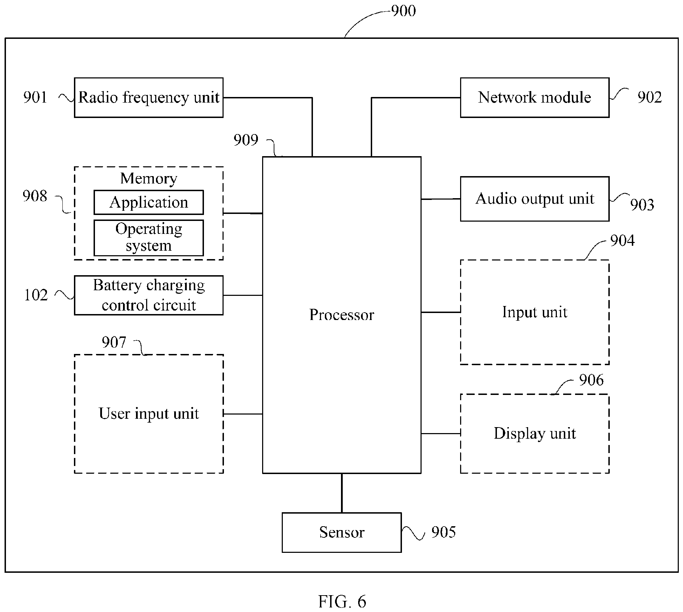

An embodiment of this application also provides an electronic device 900, including the battery charging control circuit described in the above embodiment of this application. FIG. 6 is a schematic diagram of the hardware structure of an electronic device 900 that implements an embodiment of this application. The electronic device 900 includes, but is not limited to: a radio frequency unit 901, a network module 902, an audio output unit 903, an input unit 904, a sensor 905, a display unit 906, a user input unit 907, a battery charging control circuit 102, a memory 908, a processor 909, etc.

The battery charging control circuit 102 may correspond to the battery charging control circuit in any of the above-mentioned embodiments shown in FIG. 1 to FIG. 5, and can achieve the same technical effect. To avoid duplication, details will not be described here.

A person skilled in the art can understand that the electronic device 900 may further include a power supply (such as a battery) that supplies power to each component. The power supply may be logically connected to the processor 909 by using a power supply management system, to implement functions such as charging and discharging management, and power consumption management by using the power supply management system. The structure of the electronic device shown in FIG. 6 does not constitute a limitation on the electronic device. The electronic device may include components more or fewer than those shown in the diagram, a combination of some components, or different component arrangements. Details are not described herein.

The processor is a processor in the electronic device in the foregoing embodiment. The readable storage medium includes a computer-readable storage medium, such as a computer read-only memory (Read-Only Memory, ROM), a random access memory (Random Access Memory, RAM), a magnetic disk, an optical disc, or the like.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially, or the part contributing to the prior art may be implemented in a form of a software product. The computer software product is stored in a storage medium (for example, a ROM/RAM, a magnetic disk, or a compact disc), and includes a plurality of instructions for instructing a terminal (which may be a mobile phone, a computer, a server, an air conditioner, a network device, or the like) to perform the method described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

**Claims**

1. A battery charging control circuit, comprising:

   a first battery and a second battery connected in series;
   a capacitor module connected to the first battery and the second battery connected in series;
   a charging module, respectively connected to the capacitor module and the first battery and the second battery connected in series; and
   a control module, respectively connected to the capacitor module and the first battery and the second battery connected in series, and configured to: in a case that an electricity amount of only one of the first battery and the second battery reaches a first preset threshold, control to disconnect a path for the charging module to charge the first battery and the second battery and to connect a path for the charging module to charge the capacitor module; and in a case that a capacitor voltage of the capacitor module reaches a second preset threshold, control to disconnect the path for the charging module to charge the capacitor module and to connect a path for the capacitor module to charge a battery of the first battery and the second battery whose electricity amount has not reached the first preset threshold.

2. The circuit according to claim 1, wherein the circuit further comprises a switch group, a switch in the switch group comprises a first access end, a second access end and a control end, the first access end and the second access end of the switch in the switch group are respectively connected to the first battery and the second battery connected in series, the capacitor module and the charging module, and the control module is connected to the control end of the switch in the switch group and controls the corresponding charging path through the control end of the switch in the switch group.

3. The circuit according to claim 2, wherein the switch group comprises a second switch, a third switch, a fourth switch, a fifth switch and a sixth switch, the capacitor module comprises a first capacitor and a second capacitor, a first end of the first capacitor is connected to a first access end of the fifth switch, a second end of the first capacitor is connected to a first access end of the fourth switch, a first end of the second capacitor is connected to a second access end of the third switch and a first access end of the sixth switch, a first access end of the second switch is connected to a first end of the charging module and a first access end of the third switch, a second access end of the second switch is connected to a first end of the second battery that is not connected to the first battery and a second access end of the sixth switch, a first access end of the third switch is connected to a first end of the charging module, a second access end of the third switch is connected to a first access end of the sixth switch, a second access end of the fourth switch is connected to a second end of the first battery that is not connected to the second battery and a second end of the charging module, a second access end of the fifth switch is connected to a third end of the first battery that is connected to the second battery, and a second access end of the sixth switch is connected to the first end of the second battery that is not connected to the first battery and a second access end of the second switch.

4. The circuit according to claim 3, wherein the control module is specifically configured to:

control the second switch in the switch group to turn on to form a first charging path, and the charging module charges the first battery and the second battery through the first charging path; and

in a case of detecting that an electricity amount of only one of the first battery and the second battery reaches a first preset threshold, control the second switch in the first charging path to turn off and control the third switch and the fourth switch in the switch group to turn on to form a second charging path, and the charging module charges the first capacitor and the second capacitor through the second charging path.

5. The circuit according to claim 4, wherein when a battery of the first battery and the second battery whose electricity amount reaches the first preset threshold is the second battery, the control module is specifically configured to:

in a case of detecting that capacitance voltages of the first capacitor and the second capacitor reach a second preset threshold, control the third switch in the second charging path to turn off and control the fifth switch in the switch group to turn on, to connect the first capacitor and the first battery in parallel and charge the first battery.

6. The circuit according to claim 4, wherein when a battery of the first battery and the second battery whose electricity amount reaches the first preset threshold is the first battery, the control module is specifically configured to:

in a case of detecting that series capacitance voltages of the first capacitor and the second capacitor reach a second preset threshold, control the third switch and the fourth switch in the second charging path to turn off and control the fifth switch and the sixth switch in the switch group to turn on, to connect the second capacitor and the second battery in parallel and charge the second battery.

7. The circuit according to claim 3, wherein the first capacitor and the second capacitor have the same capacitance.

8. The circuit according to claim 3, wherein the circuit further comprises a third battery connected in series with the first battery and the second battery, the capacitor module further comprises a third capacitor, and the switch group further comprises a ninth switch, wherein

a second end of the third battery is connected to a first end of the second battery that is not connected to the first battery, and a first end of the third battery is connected to a second access end of the second switch;

a first end of the third capacitor is connected to a second access end of the second switch, and a second end of the third capacitor is connected to a first end of the second capacitor; and a first end of the ninth switch is connected to the first end of the third capacitor, and a second end of the ninth switch is connected to the first end of the third battery.

9. The circuit according to claim 2, wherein the switch group comprises a second switch, a third switch, a fourth switch, a sixth switch, a seventh switch, and an eighth switch, the capacitor module comprises a capacitor, a first end of the capacitor is connected to a second access end of the third switch, a first access end of the sixth switch, and a first access end of the seventh switch, a second end of the capacitor is connected to a first access end of the fourth switch and a first access end of the eighth switch, a first access end of the second switch is connected to a first end of the charging module and a first access end of the third switch, a second access end of the second switch is connected to a first end of the second battery that is not connected to the first battery and a second access end of the sixth switch, a first access end of the third switch is connected to a first end of the charging module, a second access end of the third switch is connected to a first access end of the sixth switch and a first access end of the seventh switch, a second access end of the fourth switch is connected to a second end of the first battery that is not connected to the second battery and a second end of the charging module, a second access end of the sixth switch is connected to a first end of the second battery that is connected to the first battery and a second access end of the second switch, and a second access end of the seventh switch and a second access end of the eighth switch are connected to a third end of the first battery that is connected to the second battery.

10. The circuit according to claim 9, wherein the control module is specifically configured to:

control the second switch in the switch group to turn on to form a third charging path, and the charging module charges the first battery and the second battery through the third charging path; and

in a case of detecting an electricity amount of only one of the first battery and the second battery reaches the first preset threshold, control the second switch in the third charging path to turn off and control the third switch and the fourth switch in the switch group to turn on to form a fourth charging path, and the charging module charges the capacitor through the fourth charging path.

**11.** The circuit according to claim 10, wherein when a battery of the first battery and the second battery whose electricity amount reaches the first preset threshold is the second battery, the control module is specifically configured to:
in a case of detecting that a capacitance voltage of the capacitor reaches a second preset threshold, control the third switch in the fourth charging path to turn off and control the fourth switch and the seventh switch in the switch group to turn on, to connect the capacitor and the first battery in parallel and charge the first battery.

**12.** The circuit according to claim 10, wherein when a battery of the first battery and the second battery whose electricity amount reaches the first preset threshold is the first battery, the control module is specifically configured to:
in a case of detecting that a capacitance voltage of the capacitor reaches a second preset threshold, control the third switch and the fourth switch in the fourth charging path to turn off and control the eighth switch and the sixth switch in the switch group to turn on, to connect the capacitor and the second battery in parallel and charge the second battery.

**13.** The circuit according to claim 10, wherein the circuit further comprises a third battery connected in series with the first battery and the second battery, and the switch group further comprises a tenth switch, wherein

a second end of the third battery is connected to a first end of the second battery that is not connected to the first battery, and a first end of the third battery is connected to a second access end of the second switch; and
a first end of the tenth switch is connected to the first end of the capacitor, and the second end of the second switch is connected to a first end of the third battery.

**14.** The circuit according to claim 1, further comprising a differential voltage detection circuit, connected between the control module and the capacitor module and configured to measure the capacitor voltage of the capacitor module and send the capacitor voltage to the control module.

**15.** The circuit according to claim 1, further comprising an electricity amount metering module, connected between the control module and the first battery and the second battery connected in series and configured to measure electricity amounts of the first battery and the second battery respectively and send the electricity amounts to the control module.

**16.** The circuit according to claim 1, wherein the switch is a MOS transistor.

**17.** An electronic device, comprising the battery charging control circuit according to any one of claims 1 to 16.

FIG. 1

FIG. 2

FIG. 3

FIG. 4

FIG. 5

900

| | | | |
|---|---|---|---|
| 901 | Radio frequency unit | | Network module | 902 |

909

Memory
908
Application

Operating system

102 | Battery charging control circuit

907

User input unit

Processor

Network module | 902

Audio output unit | 903

904

Input unit

906

Display unit

Sensor | 905

FIG. 6

# EP 4 372 954 A1

<table>
<tr><td colspan="2" align="center"><strong>INTERNATIONAL SEARCH REPORT</strong></td><td colspan="2">International application No.<br><br><strong>PCT/CN2022/104948</strong></td></tr>
</table>

**A. CLASSIFICATION OF SUBJECT MATTER**

H02J 7/00(2006.01)i; H01M 10/44(2006.01)i

According to International Patent Classification (IPC) or to both national classification and IPC

**B. FIELDS SEARCHED**

Minimum documentation searched (classification system followed by classification symbols)

H02J H01M

Documentation searched other than minimum documentation to the extent that such documents are included in the fields searched

Electronic data base consulted during the international search (name of data base and, where practicable, search terms used)

CNTXT; SIPOABS; DWPI; USTXT; CNKI; IEEE: 充电, 电池, 储能, 串联, 电量, 电压, 阈值, 预设, 开关, 断, 切换, 电容, charge, cell, battery, energy storage, series, SOC, Electric quantity, voltage, threshold, preset, switch, cut off, Capacitance, capacitor

**C. DOCUMENTS CONSIDERED TO BE RELEVANT**

| Category* | Citation of document, with indication, where appropriate, of the relevant passages | Relevant to claim No. |
|---|---|---|
| PX | CN 113541250 A (VIVO COMMUNICATION TECHNOLOGY CO., LTD.) 22 October 2021 (2021-10-22)<br>     claims 1-17 | 1-17 |
| A | CN 104953194 A (BYD CO., LTD.) 30 September 2015 (2015-09-30)<br>     description, paragraphs [0007]-[0012], and figures 1-6 | 1-17 |
| A | CN 103560548 A (SUZHOU INSTITUTE OF NANO-TECH AND NANO-BIONICS, CHINESE ACADEMY OF SCIENCES) 05 February 2014 (2014-02-05)<br>     entire document | 1-17 |
| A | US 2016013521 A1 (NEC CORP.) 14 January 2016 (2016-01-14)<br>     entire document | 1-17 |
| A | JP 2013192371 A (SUMITOMO ELECTRIC INDUSTRIES et al.) 26 September 2013 (2013-09-26)<br>     entire document | 1-17 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **01 September 2022** | **21 September 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/104948**

| Patent document cited in search report | | | Publication date (day/month/year) | Patent family member(s) | | | Publication date (day/month/year) |
|---|---|---|---|---|---|---|---|
| CN | 113541250 | A | 22 October 2021 | None | | | |
| CN | 104953194 | A | 30 September 2015 | CN | 104953194 | B | 22 August 2017 |
| CN | 103560548 | A | 05 February 2014 | CN | 103560548 | B | 23 December 2015 |
| US | 2016013521 | A1 | 14 January 2016 | WO | 2014133009 | A1 | 04 September 2014 |
| | | | | JP | 6041040 | B2 | 07 December 2016 |
| | | | | US | 9774062 | B2 | 26 September 2017 |
| | | | | JPWO | 2014133009 | S | 02 February 2017 |
| JP | 2013192371 | A | 26 September 2013 | None | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110794675